# EUROPÄISCHE PATENTANMELDUNG

(11) **EP 4 322 361 A1**
(43) Veröffentlichungstag der Anmeldung: **14.02.2024**
(21) Anmeldenummer: 22189470.2
(22) Anmeldetag: 09.08.2022
(51) Int. Cl.: H02J 3/46, H02J 3/50, H02J 13/00

(54) **VERFAHREN ZUM BETREIBEN EINES LOKALEN ENERGIENETZES, COMPUTERPROGRAMMPRODUKT, COMPUTERLESBARES SPEICHERMEDIUM SOWIE NETZMANAGEMENTSYSTEM**

(71) Anmelder: Siemens Aktiengesellschaft, 80333 München (DE)
(72) Erfinder: Amthor, Arvid, 98631 Grabfeld OT Nordheim (DE); Metzger, Michael, 85570 Markt Schwaben (DE); Niessen, Stefan, 91056 Erlangen (DE); Schreck, Sebastian, 90439 Nürnberg (DE); Thiem, Sebastian, 91413 Neustadt an der Aisch (DE)
(74) Vertreter: Siemens Patent Attorneys

(57) **Zusammenfassung**

Die Erfindung betrifft ein Verfahren zum Betreiben eines lokalen Energienetzes (12) mittels eines Netzmanagementsystems (10), mit den Schritten:
- Bereitstellen einer Netztopologie (16) des lokalen Energienetzes (12), wobei zumindest ein lokaler Energieerzeuger (18) in dem lokalen Energienetz (12) bereitgestellt wird;
- Bestimmen einer zukünftigen Blindleistungsanforderung (34) innerhalb des lokalen Energienetzes (12) für einen vorgegebenen Zeitraum mittels einer elektronischen Recheneinrichtung (14) des Netzmanagementsystems (10);
- Übermittel einer Anfrage an den lokalen Energieerzeuger (18) zum zumindest teilweise Erbringen der Blindleistung (28) innerhalb des vorgegebenen Zeitraums erbringen kann;
- Bei einer positiven Rückmeldung zu der Anfrage, Bestätigen der Blindleistungserbringung durch den lokalen Energieerzeuger (18) mittels der elektronischen Recheneinrichtung (14); und
- Innerhalb des vorgegebenen Zeitraums Betreiben des lokalen Energienetzes (12) mittels der durch den lokalen Energieerzeuger (18) bereitgestellten Blindleistung (28). Ferner betrifft die Erfindung ein Computerprogrammprodukt, ein computerlesbares Speichermedium sowie ein Netzmanagementsystem (10) .

## Beschreibung

Die Erfindung betrifft ein Verfahren zum Betreiben eines lokalen Energienetzes mittels eines Netzmanagementsystems gemäß dem Oberbegriff vom geltenden Patentanspruch 1. Ferner betrifft die Erfindung ein Computerprogrammprodukt, ein computerlesbares Speichermedium sowie ein Netzmanagementsystem.

Durch die starke Zunahme von im Verteilnetz angeschlossenen Stromerzeugungsanlagen, Batteriespeichern und sektorgekoppelten Endverbrauchern, wie beispielsweise Wärmepumpen oder Elektroladeinfrastruktur, kommt dem Netzengpassmanagement auch in den unteren Spannungsebenen eine immer größer werdende Bedeutung zu. Ein Netzausbau zur Behebung von durch Engpässe verursachten Problemen im Hinblick auf die Spannungsqualität ist wegen der geforderten Kosteneffizienz und mangelnden Ressourcen für die Netzbetreiber heute nicht mehr vollumfänglich durchführbar. Dieses Problem verschärft sich durch den Zubau von Photovoltaik-Anlagen, Wärmepumpen und Ladestationen für Elektrofahrzeuge. Damit gilt es, intelligente Lösungen zur Behebung von Spannungsbandverletzungen zu realisieren. Eine klassische Volt-VAR-Spannungsregelung, wie sie aus höheren Spannungsebenen bekannt ist, lässt sich aus Kostengründen, wegen fehlender Mess- und Regelungstechnik, sowie nicht verfügbarer Aktoren in der Regel nicht umsetzen. Im Übertragungsnetz werden oft bilaterale Verträge zwischen Großkraftwerksbetreiber und Netzbetreiber bezüglich der Bereitstellung von Blindleistungskapazitäten für den sicheren Systembetrieb abgeschlossen. Derzeitige Einzellösungen sind bei dezentralen Energieanlagen nicht denkbar.

Aufgabe der vorliegenden Erfindung ist es, ein Verfahren, ein Computerprogrammprodukt sowie ein Netzwerkmanagementsystem zu schaffen, mittels welchem ein verbesserter Betrieb eines lokalen Energienetzes realisiert werden kann.

Diese Aufgabe wird durch ein Verfahren, ein Computerprogrammprodukt sowie durch ein Netzmanagementsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines lokalen Energienetzes mittels eines Netzmanagementsystems. Es erfolgt das Bereitstellen einer Netztopologie des lokalen Energienetzes, wobei zumindest ein lokaler Energieerzeuger in dem lokalen Energienetz bereitgestellt wird. Es wird eine zukünftige Blindleistungsanforderung innerhalb des lokalen Energienetzes für einen vorgegebenen Zeitraum mittels einer elektronischen Recheneinrichtung des Netzmanagementsystems bestimmt. Es erfolgt das Übermitteln einer Anfrage an den lokalen Energieerzeuger, ob dieser zumindest teilweise die Blindleistung innerhalb des vorgegebenen Zeitraums erbringen kann. Bei einer positiven Rückmeldung zu der Anfrage erfolgt das Bestätigen der Blindleistungserbringung durch den lokalen Energieerzeuger mittels der elektronischen Recheneinrichtung. Innerhalb des vorgegebenen Zeitraums wird das lokale Energienetz mittels der durch den lokalen Energieerzeuger bereitgestellten Blindleistung betrieben.

Insbesondere kann somit ein Blindleistungsmarktplatz geschaffen werden, bei welchem beispielsweise ein automatisierter Handel und vollständig automatisierte Leistungserbringung von Blindleistung realisiert werden kann. Insbesondere kann somit eine große Anzahl von dezentralen Energieanlagen, insbesondere Erzeugeranlagen, in die Blindleistungsbereitstellung mit einbezogen werden und daraus folgt eine hohe örtliche Auflösung des Blindleistungseinsatzes. Letztere ist für die Kompensation von Spannungsbandverletzungen vorteilhaft, da lokaler Blindleistungseinsatz gefordert ist, welcher nur lokal eingesetzt werden kann. Es ist nicht mehr notwendig, dass der Netzbetreiber diese Anlagen direkt steuert, da diese sich vertragsgemäß verhalten. Das System erhöht somit die Nachhaltigkeit des Energiesystems, da technische Anlagen verwendet werden, die bereits bestehen und nicht unmittelbar neue Anlagen errichtet werden müssen. Ferner ist ein unnötiger Netzausbau durch diesen lokalen Blindleistungsmarkt vermieden. Insgesamt können somit die Gesamtbetriebskosten des Verteilnetzes gesenkt werden. Eine Aktivierung von Blindleistung an Punkten des Netzes mit Spannungsbandverletzungsproblemen wird durch den lokalen Blindleistungsmarkt erst ermöglicht. Die Blindleistung kann an den Koppelstellen des Verteilnetzes der höheren Netzebenen als Dienstleistung zur Verfügung gestellt werden. Diese kann auch wieder als Blindleistungsmarkt ausgestaltet werden. Der Netzbetreiber der höheren Netzebene tritt dann als Marktteilnehmer auf den Blindleistungsmarkt auf und beschafft dort die von ihm an den Netzkuppelstellen benötigte Blindleistung. Der vorgeschlagene Blindleistungsmarkt kann in diesem Sinne hierarchisch, insbesondere nach der vorherrschenden Netztopologie, aufgebaut werden. Der beschriebene Blindleistungsmarkt kann somit in Kombination mit einem zeitlich vorgelagerten Wirkleistungsmarkt betrieben werden und somit optimal unter den Randbedingungen der Wirkleistungserbringung und Anlagenparametern, beispielsweise der maximalen Scheinleistung oder Kosinus(Phi-Bereich) betrieben werden.

Insbesondere löst somit die Erfindung das Problem, dass angesichts der politisch beabsichtigten Abschaltung der Großkraftwerke es notwendig ist, Flexibilitäten der dezentralen Energieanlagen für das Netzengpassmanagement zu nutzen. Mit dem vorgeschlagenen Konzept des lokalen Energiemarktes für die Blindleistung ist gezeigt, dass Kapazitäten von Netzbetriebsmitteln beim lokalen Stromhandel berücksichtigt werden können. Diese Blindleistung pro Zeitintervall beziehungsweise Zeitraum beziehungsweise Blindleistungsflexibilitäten können über den vorgeschlagenen lokalen Marktplatz vom Netzbetreiber erworben werden und für die Einhaltung der Spannungsbänder und letztendlich den sicheren Netzbetrieb genutzt werden. Insbesondere ist somit ein lokaler Blindleistungsmarkt vorgeschlagen, auf dem der Netzbetreiber seinen Blindleistungsbedarf je nach Netzzustand von den angeschlossenen dezentralen Energieanlagen besorgen kann. Als Produkt wird auf diesem lokalen Marktplatz Blindleistung in verschiedener zeitlicher und örtlicher Auflösung gehandelt. Beispielsweise kann hier ein Einstundenfenster beziehungsweise Fünfminutenfenster und die Erbringung in definierten Netzgebieten beziehungsweise definierten Netzknoten, je nach Marktmechanismus, vorgeschlagen werden. Dieser Markt kann sowohl als Day-Ahead als auch als Intraday-Markt ausgestaltet sein.

Gemäß einer vorteilhaften Ausgestaltungsform wird eine durch den zumindest einen lokalen Energieerzeuger bereitgestellte Wirkleistung für das lokale Energienetz berücksichtigt. Insbesondere kann somit berücksichtigt werden, wie viel Wirkleistung beispielsweise durch den lokalen Energieerzeuger bereits für den vorgegebenen Zeitraum bereitgestellt wird. In Abhängigkeit davon kann wiederum die potenziell verfügbare Blindleistungskapazität des lokalen Energieerzeugers bestimmt werden. Somit kann zuverlässig eine Blindleistungskompensation bereitgestellt werden.

Ferner hat es sich als vorteilhaft erwiesen, wenn die Anfrage zur Blindleistungserzeugung zeitlich nach einem Wirkleistungsplan für das lokale Energienetz erzeugt wird. Insbesondere handelt es sich somit um einen zum Wirkleistungsmarkt nachgelagerten Prozess für die Blindleistung. Insbesondere kann somit die elektronische Recheneinrichtung dazu ausgebildet sein, auf Basis des bereits bekannten Wirkleistungsfahrplans zu ermitteln, wie viel Blindleistung der lokale Energieerzeuger zu welchem Zeitpunkt, insbesondere beispielsweise des Folgetages, zur Verfügung stellen kann. Somit kann zuverlässig die Blindleistung innerhalb des lokalen Energienetzes gesteuert werden.

Eine weitere vorteilhafte Ausgestaltungsform sieht vor, dass eine potenziell verfügbare Blindleistung von dem zumindest einen lokalen Energieerzeuger an die elektronische Recheneinrichtung übermittelt wird. Hierbei können beispielsweise Messwerte des lokalen Energieerzeugers an die elektronische Recheneinrichtung übermittelt werden. Beispielsweise können Messwerte zur Erzeugung von Wirkleistung an die elektronische Recheneinrichtung übermittelt werden, sodass diese in die Lage versetzt wird, die potenziell verfügbare Blindleistung zu ermitteln.

Es hat sich weiterhin als vorteilhaft erwiesen, wenn eine potenziell verfügbare Scheinleistung der lokalen Erzeugungseinrichtung für das lokale Energienetz berücksichtigt wird. Insbesondere ist die Scheinleistung, durch die gleichzeitig erbringbare maximale mögliche Wirkleistung und Blindleistung begrenzt wird. Daher ist es notwendig, dass die Wirk- und Blindleistung sequenziell gehandelt werden. Nur so kann sichergestellt werden, dass die verfügbare Scheinleistung eines Betriebsmittels zu jedem Zeitpunkt nicht überschritten wird.

Ferner hat es sich als vorteilhaft erwiesen, wenn die Blindleistungsabgabe von zumindest einem lokalen Energieerzeuger mittels der elektronischen Recheneinrichtung gesteuert wird. Insbesondere kann somit ein automatisierter Betrieb des lokalen Energieerzeugers realisiert werden, wodurch automatisiert eine Netzstabilität realisiert werden kann.

Gemäß einer weiteren vorteilhaften Ausgestaltungsform wird der lokale Energieerzeuger von dem Netzmanagementsystem für die Blindleistungsabgabe entlohnt. Insbesondere kann somit eine Handelsplattform bereitgestellt werden, bei welcher der lokale Energieerzeuger für das Bereitstellen der Blindleistung entsprechend entlohnt werden kann. Somit ist der lokale Energieerzeuger angehalten, auch am entsprechenden Blindleistungsmarkt teilzunehmen.

Ebenfalls vorteilhaft ist, wenn zumindest ein den lokalen Energieerzeuger charakterisierender Parameter an die elektronische Recheneinrichtung übermittelt wird und in Abhängigkeit von dem übermittelten Parameter eine potenzielle Blindleistungsabgabe des lokalen Energieerzeugers mittels der elektronischen Recheneinrichtung bestimmt wird. Als charakterisierender Parameter kann beispielsweise die geplante Wirkleistungsabgabe übermittelt werden. Ferner können entsprechende Parameter, beispielsweise welche tatsächliche Leistung der lokale Energieerzeuger erbringen kann, eventuelle Defekte des lokalen Energieerzeugers sowie weitere Randbedingungen, beispielsweise zu welchem Preis der lokale Energieerzeuger die Blindleistung erbringen möchte, mit übertragen werden. Dies kann berücksichtigt werden, um die entsprechende Blindleistung im lokalen Energienetz wirksam zu steuern.

Es hat sich weiter als vorteilhaft erwiesen, wenn in Abhängigkeit von einer Wetterprognose und/oder einer zukünftigen Zeit für den Zeitraum die potenzielle Blindleistungsabgabe bestimmt wird. Insbesondere bei beispielsweise Windkraftanlagen oder bei Photovoltaik-Anlagen ist die Wetterprognose entscheidend, um festzustellen, wie viel Wirkleistung und/oder Blindleistung der lokale Energieerzeuger erzeugen kann. Ferner ist diese Wetterprognose wiederum abhängig von dem entsprechenden Zeitraum, wann diese erzeugt werden kann. In Abhängigkeit davon kann nun wiederum das potenzielle Blindleistungsangebot ermittelt werden.

Eine weitere vorteilhafte Ausgestaltungsform sieht vor, dass eine relative Position des lokalen Energieerzeugers innerhalb des lokalen Energienetzes bei der Blindleistungsanfrage berücksichtigt wird. Insbesondere, da die Blindleistung im Wesentlichen Spannungsschwankungen innerhalb des lokalen Energienetzes beeinflusst, ist eine relative Position, beispielsweise an welchem Strang des lokalen Energienetzes die Erzeugung stattfindet, von entscheidender Bedeutung, um die Netzstabilität durchzuführen. Hiermit kann durch die relative Position, insbesondere die Strangposition, innerhalb des lokalen Energienetzes bestimmt werden und auf Basis dessen wiederum überprüft werden, welche Blindleistungsanforderungen innerhalb dieses Stranges notwendig ist, um eine Stabilität dort realisieren zu können.

Ferner kann vorgesehen sein, dass während des Betriebs des lokalen Energienetzes die Blindleistungsanfrage mittels der elektronischen Recheneinrichtung in Abhängigkeit von dem aktuell benötigten Blindleistungsbedarf innerhalb des lokalen Energienetzes angepasst wird. Insbesondere können somit in dem vorgegebenen Zeitraum die Blindleistungssollwerte an die angeschlossenen Betriebsmittel um die vereinbarte Blindleistung dem Netzanschlussschlusspunkt bereitzustellen, überprüft werden. Nachdem die Leistungserbringung durch die entsprechenden Primärkomponenten erfolgt, wird auf Basis von Messwerten die Abrechnung der Handelsgeschäfte vollautomatisch durch den entsprechenden Blindleistungsmarktplatz realisiert und diese Daten über eine Schnittstelle an das Abrechnungssystem des Marktplatzbetreibers übertragen. Insbesondere kann zusätzlich zu dem eigentlichen zukünftigen Zeitpunkt in nahezu Echtzeit die Anforderung an die Anlagen übermittelt werden, um die vereinbarte Blindleistung abzusenken beziehungsweise zu erhöhen. Der Netzbetreiber kann im Netzbetrieb aus Echtzeitmesswerten zum Beispiel von Photovoltaik-Anlagen, die ihm Teilnehmer zur Verfügung stellen, so ferner eingreifen, falls notwendig.

Ferner kann vorgesehen sein, dass das lokale Energienetz mit einem übergeordneten Energienetz gekoppelt wird und mittels des Netzmanagementsystems in Abhängigkeit von der bereitgestellten Blindleistung innerhalb des lokalen Energienetzes zusätzlich Blindleistung aus dem übergeordneten Energienetz angefragt wird. Alternativ kann auch Blindleistung für das übergeordnete Energienetz bereitgestellt werden. Somit ist es ermöglicht, dass die Netzstabilität innerhalb des lokalen Energienetzes realisiert werden kann. Sollte beispielsweise zu viel Blindleistung innerhalb des lokalen Energienetzes bereitgestellt werden können, und das übergeordnete Energienetz Blindleistung benötigen, so kann dies ebenfalls durchgeführt werden. Sollte jedoch zu wenig Blindleistung innerhalb des lokalen Energienetzes zur Verfügung stehen, so kann auch aus dem übergeordneten Energienetz Blindleistung angefragt werden, um die Netzstabilität des lokalen Energienetzes realisieren zu können.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen. Das Computerprogrammprodukt kann auch als Computerprogramm bezeichnet werden.

Weiterhin betrifft die Erfindung auch ein computerlesbares Speichermedium mit einem Computerprogrammprodukt nach dem vorhergehenden Aspekt.

Die Erfindung betrifft auch ein Netzmanagementsystem zum Betreiben eines lokalen Energienetzes, mit zumindest einer elektronischen Recheneinrichtung, wobei das Netzmanagementsystem zum Durchführen eines Verfahrens nach dem vorhergehenden Aspekt ausgebildet ist. Insbesondere wird das Verfahren mittels des Netzmanagementsystems durchgeführt.

Die elektronische Recheneinrichtung weist beispielsweise Prozessoren, Schaltkreise, insbesondere integrierte Schaltkreise, sowie weitere elektronische Bauteile auf, um entsprechende Verfahrensschritte durchführen zu können.

Vorteilhafte Ausgestaltungsformen des Verfahrens sind als vorteilhafte Ausgestaltungsformen des Computerprogrammprodukts, des computerlesbaren Speichermediums sowie des Netzmanagementsystems anzusehen. Das Netzmanagementsystem weist dazu gegenständliche Merkmale auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt werden.

In der nachfolgenden Beschreibung sind Ausführungsbeispiele näher beschrieben. Dazu zeigen:
- FIG 1: ein schematisches Blockschaltbild gemäß einer Ausführungsform eines Netzmanagementsystems; und
- FIG 2: ein schematisches Ablaufdiagramm gemäß einer Ausführungsform des Verfahrens.

In den Figuren sind gleiche oder funktionsgleiche Elemente mit gleichen Bezugszeichen versehen.

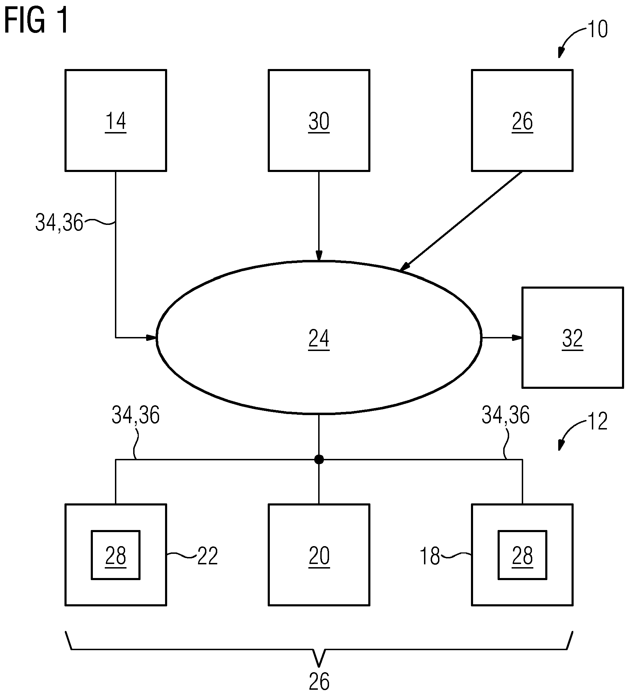

FIG 1 zeigt ein schematisches Blockschaltbild gemäß einer Ausführungsform eines Netzmanagementsystems 10. Das Netzmanagementsystem 10 ist zum Betreiben eines lokalen Energienetzes 12 ausgebildet. Das Netzmanagementsystem 10 weist hierzu zumindest eine elektronische Recheneinrichtung 14 auf, welche beispielsweise als Cloud oder Backend ausgebildet sein kann.

Insbesondere wird eine Netztopologie 16 des lokalen Energienetzes 12 bereitgestellt, wobei in dem lokalen Energienetz 12 zumindest ein lokaler Energieerzeuger 18 bereitgestellt werden kann. Ferner ist insbesondere gezeigt, dass beispielsweise auch ein lokaler Energieverbraucher 20 sowie ein weiterer lokaler Energieerzeuger 22 innerhalb der Netztopologie 16 vorhanden sein kann.

Insbesondere ist vorliegend gezeigt, dass die elektronische Recheneinrichtung 14 einen sogenannten Handelsagenten 24 aufweisen kann. Der Handelsagent 24 ist beispielsweise mit einem übergeordneten Energienetz 26 gekoppelt, und kann beispielsweise Blindleistung 28 auch von dem übergeordneten Energienetz 26 anfordern beziehungsweise zur Verfügung stellen. Ferner sind in dem Handelsagenten 24 entsprechende Netzrestriktionen 30 bekannt, welche insbesondere innerhalb des lokalen Energienetzes 12 eingehalten werden müssen. Der Handelsagent 24 ist ferner mit einer entsprechenden Transaktionsplattform 32 gekoppelt, um entsprechende Blindleistungspreise bereitgestellt zu bekommen.

Beim erfindungsgemäßen Verfahren ist nun vorgesehen, dass eine zukünftige Blindleistungsanforderung 34 innerhalb des lokalen Energienetzes 12 für einen vorgegebenen Zeitraum mittels der elektronischen Recheneinrichtung 14 bestimmt wird. Es erfolgt das Übermitteln einer Anfrage an den lokalen Energieerzeuger 18, ob dieser zumindest teilweise die Blindleistung 28 innerhalb des vorgegebenen Zeitraums erbringen kann. Bei einer positiven Rückmeldung zu der Anfrage, erfolgt ein Bestätigen der Blindleistungserbringung durch den lokalen Energieerzeuger 18 mittels der elektronischen Recheneinrichtung 14. Es erfolgt dann wiederum das Betreiben des lokalen Energienetzes 12 innerhalb des vorgegebenen Zeitraums mittels der durch den lokalen Energieerzeuger 18 bereitgestellten Blindleistung 28.

Insbesondere kann ferner vorgesehen sein, dass eine potenziell verfügbare Blindleistung 36 von dem zumindest einen lokalen Energieerzeuger 18 an die elektronische Recheneinrichtung 14 übermittelt wird.

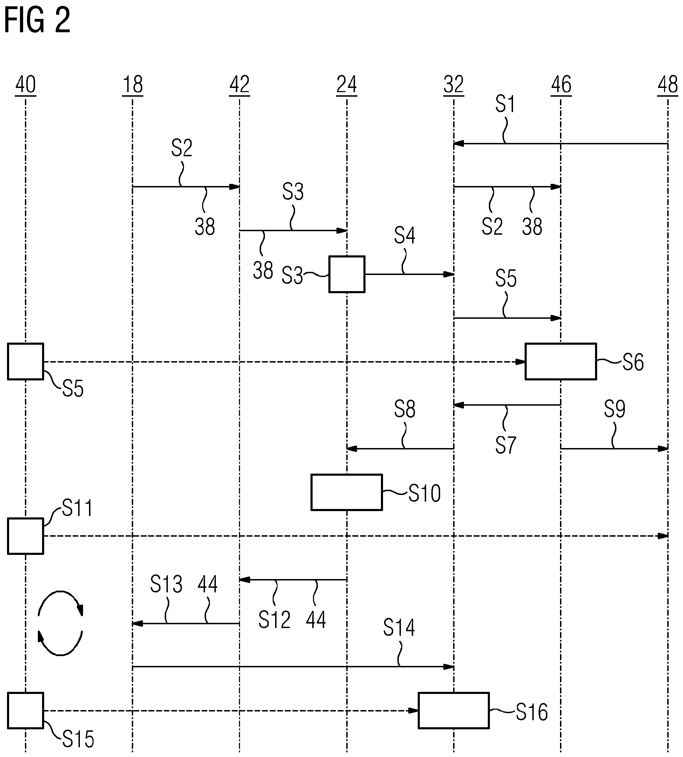

Insbesondere ist somit ein lokaler Blindleistungsmarkt 46 (Fig. 2), auf dem ein Netzbetreiber 48 (Fig. 2) seinen Blindleistungsbedarf je nach Netzzustand von den angeschlossenen dezentralen lokalen Energieerzeugern 18 besorgen kann. Als Produkt wird in diesem lokalen Marktplatz Blindleistung 28 in verschiedener zeitlicher und örtlicher Auflösung gehandelt. Dieser Markt kann sowohl als Day-Ahead als auch als Intraday-Markt ausgestaltet sein. Das Netzmanagementsystem 10 weist dabei beispielsweise den Blindleistungsmarktplatz auf, wobei der Blindleistungsmarktplatz wiederum zumindest zwei Hauptelemente aufweist, nämlich die elektronische Recheneinrichtung 14 sowie den Handelsagenten 24. Mittels der elektronischen Recheneinrichtung 14 können die angeschlossenen Teilnehmer mit dem Netzbetreiber 48 die Blindleistung 28 handeln. Hier wird die zeitlich und örtlich aufgelöste Nachfrage des beziehungsweise der Netzbetreiber 48 verarbeitet und durch einen Matching-Algorithmus mit den Angeboten 50 (Fig. 2) der Teilnehmer optimal zur Deckung gebracht, was insbesondere als Matching bezeichnet wird. Die Transaktionsplattform 32 persistiert alle relevanten Daten des Systems durch teilnehmersignierte Transkationen und realisiert eine automatisierte und garantiert eine ausgeführte Transaktionslogik. Dies führt zu Verbindlichkeit, Nachvollziehbarkeit und ermöglicht eine weitgehende Automatisierung von Funktionen im Gesamtsystem. Die Transaktionsplattform 32 beziehungsweise der Handelsagent 24 verfügt über Schnittstellen zu dem beziehungsweise den Netzbetreibern 48 und dem Abrechnungssystem der elektronischen Recheneinrichtung 14. Die Schnittstelle zu dem Netzbetreiber 48 ist notwendig, damit die zeitlich und örtlich aufgelöste Blindleistungsnachfrage des beziehungsweise der Netzbetreiber 48 in das System eingespeist und nach dem Matching die Ergebnisse beziehungsweise Beträge mit dem beziehungsweise den Netzbetreibern 48 mitgeteilt werden kann. Weiterhin ist eine Schnittstelle zum Abrechnungssystem des Plattformbetreibers essenziell, damit eine rechtsverbindliche Abrechnung des Handelsgeschehens sowohl mit dem Teilnehmer als auch dem Netzbetreiber 48 realisiert werden kann.

Ein Teilnehmer, welcher vorliegend insbesondere durch die Netztopologie 16 dargestellt ist, besitzt elektrische Anlagen, die neben der Bereitstellung von Wirkleistung auch in der Lage sind, Blindleistung 28 einzuspeisen. Diese Anlagen können sowohl aus klassischen Synchrongeneratoren, beispielsweise Dieselgeneratoren, Biomassegeneratoren oder dergleichen, als auch aus Wechselrichtern aufgebaut sein, beispielsweise in Verbindung mit Batterien, Photovoltaik-Anlagen, Windkraftanlagen, Wasserkraftanlagen, Ladestationen, Wärmepumpen oder dergleichen. Diese Primärkomponenten sind lokal automatisiert und daher steuerbar. Weiterhin stellen sie Messwerte 38 (FIG 2) in einer Anwendung der entsprechenden zeitlichen Auflösung zur Verfügung. Gesteuert werden diese Anlagen von einer Software, dem sogenannten Handelsagenten 24. Der Handelsagent 24 erstellt vollautomatisiert Gebote für Wirk- und Blindleistung 28 gegebenenfalls auf Basis von Last- und Erzeugungsprognosen. Je nachdem, ob die Anlage vollständig steuerbar ist oder nicht, können diese Erzeugungsprognosen erzeugt werden. Der Handelsagent 24 stellt die Blindleistungsangebote dem lokalen Blindleistungsmarkt 46 zur Verfügung. Nachdem der Matching-Algorithmus des Marktes den optimalen Einsatz der angeschlossenen Betriebsmittel, insbesondere somit die lokalen Erzeuger 18, berechnet hat, werden die Marktergebnisse an den Handelsagenten 24 transferiert. Dieser wiederum wandelt die Matching-Ergebnisse in Fahrpläne der Blindleistungseinspeisung um und lässt diese von einer lokalen Steuerung zum Erbringungszeitpunkt ausführen.

An dieser Stelle sei erwähnt, dass die gleichzeitige erbringbare maximal mögliche Wirkleistung und Blindleistung 28 durch die Scheinleistung des lokalen Erzeugers 18 begrenzt wird. Daher ist es notwendig, dass die Wirk- und Blindleistung 28 sequenziell gehandelt werden. Nur so kann der Handelsagent 24 sicherstellen, dass die verfügbare Scheinleistung des lokalen Energieerzeugers 18 zu jedem Zeitpunkt nicht überschritten wird.

FIG 2 zeigt einen schematischen zeitlichen Ablauf gemäß einer Ausführungsform des Verfahrens. FIG 2 zeigt insbesondere ein Ereignis 40, den lokalen Energieerzeuger 18, welcher auch als Betriebsmittel bezeichnet werden kann, eine sogenannte Automatisierung 42, den Handelsagenten 24, die entsprechende Transaktionsplattform 32, den Blindleistungsmarkt 46 sowie den Netzbetreiber 48.

In einem ersten Schritt S1 wird ein örtlich und zeitlich aufgelöster Blindleistungsbedarf im Netzgebiet von dem Netzbetreiber 48 an die Transaktionsplattform 32 übermittelt. In einem zweiten Schritt S2 werden von dem lokalen Energieerzeuger 18 Messdaten 38 an die Automatisierung 42 übermittelt. Gleichzeitig werden die Messdaten 38 von der Transaktionsplattform 32 an den Blindleistungsmarkt 46 übermittelt. In einem dritten Schritt S3 erfolgt wiederum das Übermitteln der Messdaten 38 von der Automatisierung 42 zu dem Handelsagenten 24. Von dem Handelsagenten 24 wird ein Angebot 50 erstellt. Dieses wird in einem vierten Schritt S4 von dem Handelsagenten 24 an die Transaktionsplattform 32 übermittelt. Es erfolgt dann wiederum in einem fünften Schritt S5 das Übermitteln eines örtlich und zeitlich aufgelösten Angebots von der Transaktionsplattform 32 an den Blindleistungsmarkt 46. In einem fünften Schritt S5 erfolgt wiederum der Marktschluss als Ereignis 40, und es erfolgt vom Blindleistungsmarkt 46 gleichzeitig die Berechnung des Marktergebnisses in einem sechsten Schritt S6. In einem siebten Schritt S7 wird das Marktergebnis von dem Blindleistungsmarkt 46 an die Transaktionsplattform 32 übermittelt. Die Marktergebnisse werden dann in einem achten Schritt S8 von der Transaktionsplattform 32 an den Handelsagenten 24 übermittelt, wobei dieser insbesondere die entsprechenden Marktergebnisse dort abruft. Die Marktergebnisse werden auch in einem neunten Schritt S9 von dem Blindleistungsmarkt 46 an den Netzbetreiber 48 übermittelt. Der Handelsagent 24 ermittelt dann in einem zehnten Schritt S10 die entsprechenden Fahrpläne. In einem elften Schritt S11 erfolgt dann als Ereignis 40 wiederum die Leistungserbringung. In einem zwölften Schritt S12 werden Sollwerte 44 vom Handelsagenten 24 an die Automatisierung 42 übermittelt. Diese Sollwerte 44 werden wiederum von der Automatisierung 42 in einem dreizehnten Schritt S13 an den lokalen Energieerzeuger 18 übermittelt. Es werden dann wiederum in einem vierzehnten Schritt S14 entsprechende Messdaten 38 von dem lokalen Energieerzeuger 18 an die Transaktionsplattform 32 übermittelt. In einem fünfzehnten Schritt S15 erfolgt das Ende der Leistungserbringung als Ereignis 40. Hierzu wird in einem sechzehnten Schritt S16 gleichzeitig wiederum die Abrechnung initialisiert durch die Transaktionsplattform 32.

Die Schritte S12, S13 sowie S14 werden insbesondere wiederholt durchgeführt.

Insbesondere zeigt die FIG 2, dass der lokale Markt für die Blindleistung 28 sich in zwei Phasen unterteilen lässt. Eine erste Phase ist der Blindleistungshandel. Der Blindleistungshandel erfolgt beim Day-Ahead-Handel am Vortag. Zu einem festgelegten Zeitpunkt spielt der/die Netzbetreiber 48 den erforderlichen Blindleistungsbedarf für den nächsten Tag über die Transaktionsplattform 32 in das System ein. Da der Blindleistungsbedarf und damit einhergehende Spannungsanhebungen beziehungsweise -senkungen ein örtliches Phänomen sind, muss die Nachfrage sowohl zeitlich als auch örtlich aufgelöst sein.

Der nachfolgende Ablauf gilt für alle Teilnehmer. Der Handelsagent 24 eines Teilnehmers ruft mittels der lokalen Automatisierung 42 aktuelle Messdaten 38 von den gesteuerten Betriebsmitteln, insbesondere des lokalen Erzeugers 18, ab, um deren Betriebszustand zu übermitteln. In Verbindung mit dem bereits bekannten Wirkleistungsfahrplan bestimmt der Handelsagent 24 im nächsten Schritt, wie viel Blindleistung 28 er zu welchem Zeitpunkt des Folgetages zur Verfügung stellen könnte. Dieses Blindleistungsangebot sendet er mithilfe der Transaktionsplattform 32 an den lokalen Blindleistungsmarkt 46, damit dieses einer vielleicht existierenden Nachfrage zugeordnet werden kann. Zum Zeitpunkt des Matchings wird vom lokalen Blindleistungsmarkt 46 mithilfe eines komplexen Algorithmus die Nachfrage des beziehungsweise der Netzbetreiber 48 mit den Angeboten der lokalen Energieerzeuger 18 optimal zur Deckung gebracht und bilaterale Verträge automatisch zwischen Käufer und Verkäufer geschlossen. Diese Marktergebnisse werden vom Markt in der Transaktionsplattform 32 abgelegt und von den Handelsagenten 24 der Teilnehmer zu einem definierten Zeitpunkt abgerufen. Auf Basis der Verträge berechnet der Handelsagent 24 für alle angeschlossenen lokalen Energieerzeuger 18 Sollwertfahrpläne für die Phase der Leistungserbringung.

In der Phase der Leistungserbringung sendet der Handelsagent 24 im vorgegebenen Zyklus, beispielhaft in 15 Minuten, Blindleistungssollwerte an die angeschlossenen lokalen Energieerzeuger 18, um die vertraglich vereinbarte Blindleistung 28 am Netzanschlusspunkt bereitzustellen. Nachdem die Leistungserbringung durch die lokalen Energieerzeuger 18 erfolgte, wird auf Basis von Messdaten 38 die Abrechnung der Handelsgeschäfte vollautomatisch durch den Blindleistungsmarktplatz 46 realisiert und diese Daten über eine Schnittstelle an das Abrechnungssystem des Marktplatzbetreibers übertragen.

Weiterhin ist es möglich, dass der Netzbetreiber 48 zusätzlich zum eigentlichen Day-Ahead-Handel Ergebnisse in nahezu Echtzeitanforderung an die Anlagen, insbesondere an den lokalen Energieerzeuger 18, sendet, um die vereinbarte Blindleistung 28 abzusenken beziehungsweise zu erhöhen. Der Netzbetreiber 48 kann im Netzbetrieb aus Echtzeit-Messwerten von zum Beispiel Photovoltaik-Anlagen, die ihm der lokale Energieerzeuger 18 zur Verfügung stellt, so ferner eingreifen, falls notwendig.

### Bezugszeichenliste

- 10: Netzmanagementsystem
- 12: lokales Energienetz
- 14: elektronische Recheneinrichtung
- 16: Netztopologie
- 18: lokaler Energieerzeuger
- 20: lokaler Energieverbraucher
- 22: weiterer lokaler Energieerzeuger
- 24: Handelsagent
- 26: übergeordnetes Energienetz
- 28: Blindleistung
- 30: Netzrestriktion
- 32: Transaktionsplattform
- 34: Blindleistungsanforderung
- 36: potentiell verfügbare Blindleistung
- 38: Messdaten
- 40: Ereignis
- 42: Automatisierung
- 44: Sollwerte
- 46: Blindleistungsmarkt
- 48: Netzbetreiber
- 50: Angebot
- 51 bis S16: Schritte des Verfahrens

## Patentansprüche

1. Verfahren zum Betreiben eines lokalen Energienetzes (12) mittels eines Netzmanagementsystems (10), mit den Schritten:
- Bereitstellen einer Netztopologie (16) des lokalen Energienetzes (12), wobei zumindest ein lokaler Energieerzeuger (18) in dem lokalen Energienetz (12) bereitgestellt wird;
- Bestimmen einer zukünftigen Blindleistungsanforderung (34) innerhalb des lokalen Energienetzes (12) für einen vorgegebenen Zeitraum mittels einer elektronischen Recheneinrichtung (14) des Netzmanagementsystems (10);
- Übermitteln einer Anfrage an den lokalen Energieerzeuger (18) zum zumindest teilweise Erbringen der Blindleistung (28) innerhalb des vorgegebenen Zeitraums;
- Bei einer positiven Rückmeldung zu der Anfrage, Bestätigen der Blindleistungserbringung durch den lokalen Energieerzeuger (18) mittels der elektronischen Recheneinrichtung (14); und
- Innerhalb des vorgegebenen Zeitraums Betreiben des lokalen Energienetzes (12) mittels der durch den lokalen Energieerzeuger (18) bereitgestellten Blindleistung (28).

2. Verfahren nach Anspruch 1,
**dadurch gekennzeichnet, dass**
eine durch den zumindest einen lokalen Energieerzeuger (18) bereitgestellte Wirkleistung für das lokale Energienetz (12) berücksichtigt wird.

3. Verfahren nach Anspruch 1 oder 2,
**dadurch gekennzeichnet, dass**
die Anfrage zur Blindleistungserzeugung zeitlich nach einem Wirkleistungsplan für das lokale Energienetz (12) erzeugt wird.

4. Verfahren nach einem der vorhergehenden Ansprüche,
**dadurch gekennzeichnet, dass**
eine potenziell verfügbare Blindleistung (36) von dem zumindest einem lokalen Energieerzeuger (18) an die elektronische Recheneinrichtung (14) übermittelt wird.

5. Verfahren nach einem der vorhergehenden Ansprüche,
**dadurch gekennzeichnet, dass**
eine potenziell verfügbare Scheinleistung des lokalen Erzeugers (18) für das lokale Energienetz (12) berücksichtigt wird.

6. Verfahren nach einem der vorhergehenden Ansprüche,
**dadurch gekennzeichnet, dass**
die Blindleistungsabgabe des zumindest einen lokalen Energieerzeugers (18) mittels der elektronischen Recheneinrichtung (14) gesteuert wird.

7. Verfahren nach einem der vorhergehenden Ansprüche,
**dadurch gekennzeichnet, dass**
der lokale Energieerzeuger (18) von dem Netzmanagementsystem (10) für die Blindleistungsabgabe entlohnt wird.

8. Verfahren nach einem der vorhergehenden Ansprüche,
**dadurch gekennzeichnet, dass**
zumindest ein den lokalen Energieerzeuger (18) charakterisierender Parameter an die elektronische Recheneinrichtung (14) übermittelt wird und in Abhängigkeit von dem übermittelten Parameter eine potenzielle Blindleistungsabgabe (36) des lokalen Energieerzeugers (18) mittels der elektronischen Recheneinrichtung (14) bestimmt wird.

9. Verfahren nach Anspruch 8,
**dadurch gekennzeichnet, dass**
in Abhängigkeit von einer Wetterprognose und/oder einer zukünftigen Zeit für den Zeitraum die potenzielle Blindleistungsabgabe (36) bestimmt wird.

10. Verfahren nach einem der vorhergehenden Ansprüche,
**dadurch gekennzeichnet, dass**
eine relative Position des lokalen Energieerzeugers (18) innerhalb des lokalen Energienetzes (12) bei der Blindleistungsanfrage berücksichtigt wird.

11. Verfahren nach einem der vorhergehenden Ansprüche,
**dadurch gekennzeichnet, dass**
während des Betriebs des lokalen Energienetzes (12) die Blindleistungsanfrage (34) mittels der elektronischen Recheneinrichtung (14) in Abhängigkeit von einem aktuell benötigten Blindleistungsbedarf innerhalb des lokalen Energienetzes (12) angepasst wird.

12. Verfahren nach einem der vorhergehenden Ansprüche,
**dadurch gekennzeichnet, dass**
das lokale Energienetz (12) mit einem übergeordneten Energienetz (26) gekoppelt wird und mittels des Netzmanagementsystems (10) in Abhängigkeit von der bereitgestellten Blindleistung (28) innerhalb des lokalen Energienetzes (12) zusätzlich Blindleistung (28) aus dem übergeordnetem Energienetz (26) angefragt wird oder in das übergeordnete Energienetz (26) eingespeist wird.

13. Computerprogrammprodukt mit Programmcodemitteln, welche eine elektronische Recheneinrichtung (14) dazu veranlassen, wenn die Programmcodemittel von der elektronischen Recheneinrichtung (14) abgearbeitet werden, ein Verfahren nach einem der Ansprüche 1 bis 12 durchzuführen.

14. Computerlesbares Speichermedium mit einem Computerprogrammprodukt nach Anspruch 13.

15. Netzmanagementsystem (10) zum Betreiben eines lokalen Energienetzes (12), mit zumindest einer elektronischen Recheneinrichtung (14), wobei das Netzmanagementsystem (10) zum Durchführen eines Verfahrens nach einem der Ansprüche 1 bis 12 ausgebildet ist.
